# EUROPEAN PATENT APPLICATION

(11) **EP 2 987 542 A1**
(43) Date of publication of application: **24.02.2016**
(21) Application number: 14785795.7
(22) Date of filing: 15.04.2014
(51) Int. Cl.: A63F 13/60, A63F 13/33, A63F 13/35

(54) **CONTROL METHOD FOR GAMING SYSTEM AND GAMING SYSTEM**

(30) Priority: 19.04.2013 JP 2013088360
(71) Applicant: Ukida Kensetsu Co. Ltd., Okayama 708-0022 (JP)
(72) Inventor: UKIDA Masatoshi, Tsuyama-shi Okayama 708-0022 (JP)
(74) Representative: Dennemeyer & Associates S.A.
(86) International application number: PCT/JP2014/060697
(87) International publication number: WO 2014/171445

(57) **Abstract**

A trouble and a time, which are required for checking operations of posted game modules on a game server administrator's side, are reduced.

A method for controlling a game server 1 as a game system of the present invention includes: a posting acceptance processing step of accepting posting of a game module from a game creator's terminal 2 connected via the Internet 4; a conversion processing step of converting the game module into a predetermined format in accordance with which the game module is operable in a predetermined virtual machine; a behavior information acquisition processing step of activating the already converted game module by an operation instruction from the game creator's terminal 2 and acquiring behavior information of the game module under a testing virtual machine module provided with a function of the virtual machine; and a posting registration processing step of storing the already converted game module into game storage means 11 in a case where the acquired behavior information satisfies a predetermined condition, wherein all of the processing steps are performed by being executed by a computer.

## Description

### TECHNICAL FIELD

The present invention relates to a method for controlling a game system, a game system, a computer program, a computer-readable recording medium and a computer program product for accepting posting of game modules on-line from game creators and providing the game modules on-line to game users.

### BACKGROUND ART

As a background art, a posting, examining, managing and using method of game programs, which is described in Patent Literature 1, is mentioned as an example. As shown in FIG. 8, this method posts game programs, which are created by game creators 101, to a first server 103, which is administered by a game program managing administrator 102, by uploading the game programs thereto via the Internet 104. Next, the game program managing administrator 102 examines the uploaded game programs, and uploads only game programs, which satisfy a predetermined level, from the first server 103 to second servers 106... administered by a cellular phone administrator 105 and/or the game program managing administrator 102. Next, users 108 of cellular phones 107 download the game programs from the second servers 106... via a cellular phone network 109 or via the cellular phone network 109 and the Internet, and play games while displaying the games on the cellular phones 107.

### CITATION LIST

### PATENT LITERATURE

Patent Literature 1: Japanese Patent Laid-Open Publication No. 2001-319076

### SUMMARY OF THE INVENTION

### TECHNICAL PROBLEM

However, in the art described in Patent Literature 1, for all of the game programs uploaded from the game creators 101, the game program managing administrator 102 must make an examination as to whether or not all of the game programs satisfy the predetermined level. Accordingly, there is a problem that great trouble and time are forced on the game program managing administrator 102. In particular, if the game programs are attempted to be accepted widely from general game creators 101, then game creators 101 with low technical skills are also included therein, causing a problem that the trouble and the time, which are required for the examination by the game program managing administrator 102, are further increased.

### SOLUTION TO PROBLEM

In order to solve the foregoing problem, a method for controlling a game system of a first invention includes:
a posting acceptance processing step of accepting posting of a game module from a game creator's terminal connected via a network;
a conversion processing step of converting the game module into a predetermined format in accordance with which the game module is operable in a predetermined virtual machine;
a behavior information acquisition processing step of activating the already converted game module by an operation instruction from the game creator's terminal and acquiring behavior information of the game module under a testing virtual machine module provided with a function of the virtual machine; and
a posting registration processing step of storing the already converted game module into game storage means in a case where the acquired behavior information satisfies a predetermined condition,
wherein all of the processing steps are performed by being executed by a computer.

Here, the above-described game module refers to an aggregate of a game program and data. Moreover, the above-described virtual machine module refers to an aggregate of a virtual machine program and data for executing the already converted game module.

Moreover, the above-described testing virtual machine module is not particularly limited; however, the following modes are mentioned as examples.
(1) A mode provided with a function to acquire a screen during an operation of the above-described game module.
(2) A mode provided with a function to check whether a malfunction of the above-described game module is present. The above-described malfunction is not particularly limited; however, as examples, there are mentioned that the operations fall into an endless loop, that an access is made to an outside of a memory region assigned to the above-described game module, that a command unsupported by the above-described virtual machine is attempted to be executed, and the like.
(3) A mode in which the above-described mode of (1) and the above-described mode of (2) are combined with each other.

"Activating the already converted game module by an operation instruction from the game creator's terminal under a virtual machine module provided with a function of the above-described virtual machine" is not particularly limited; however, the following modes are mentioned as examples.
(1) A mode in which, by an operation instruction from the above-described game creator's terminal, the above-described virtual machine module and the above-described already converted game module are activated on the above-described game system to progress a game, and in addition, a video during an operation thereof is distributed to the above-described game creator's terminal by streaming (a mode of performing a streaming distribution).
(2) A mode in which the above-described game creator's terminal is allowed to download the above-described virtual machine module and the above-described already converted game module, and these are activated on the game creator's terminal by an operation instruction from the game creator's terminal (a mode of performing a download distribution).

In accordance with the above-described first invention, a configuration is adopted so that the above-described already converted game module can be activated by the operation instructions from the game creator's terminal, and accordingly, the operation of the game module can be thereby checked. Then, only such game modules for which the checking of the operations has been completed are registered in the above-described game storage means, and accordingly, the subsequent trouble and time, which are required for checking the operations of the above-described game modules on the game server administrator's side, can be reduced.

As an example of a method for controlling a game system of a second invention, there is mentioned, in the above-described first invention,
a mode, in which the above-described behavior information is image data displayed on a screen of the game creator's terminal during the operation of the game module, and
the above-described predetermined condition is that the image data can be acquired.

In accordance with this configuration, it can be confirmed that the game module is activated based on the matter that the above-described image data can be acquired.

As an example of a method for controlling a game system of a third invention, there is mentioned, in the above-described first invention,
a mode, in which the above-described behavior information is malfunction information indicating a check result as to whether or not a malfunction of the game module is present, and
the above-described predetermined condition is that the above-described malfunction information indicates that the malfunction cannot be detected.

In accordance with this configuration, it can be confirmed that the above-described game module is activated by checking the above-described malfunction information.

As an example of a method for controlling a game system of a fourth invention, there is mentioned, in the above-described first invention,
a mode of further including: a distribution processing step of allowing a game user's terminal, which is connected via the network, to use the above-described game module stored in the above-described game storage means and a virtual machine module provided with the above-described function of the virtual machine.

As an example of a method for controlling a game system of a fifth invention, there is mentioned, in the above-described second invention,
a mode of further including: a distribution processing step of allowing a game user's terminal, which is connected via the network, to use the above-described game module stored in the above-described game storage means and a virtual machine module provided with the above-described function of the virtual machine.

As an example of a method for controlling a game system of a sixth invention, there is mentioned, in the above-described third invention,
a mode of further including: a distribution processing step of allowing a game user's terminal, which is connected via the network, to use the above-described game module stored in the above-described game storage means and a virtual machine module provided with the above-described function of the virtual machine.

The above-described virtual machine modules in the above-described fourth to sixth inventions are not particularly limited; however, the above-described testing virtual machine module can also be used.

In accordance with such configurations of the above-described fourth to sixth inventions, the above-described game module, for which the operation confirmation and the checking as to whether or not the malfunction is present have been completed, can be distributed to the game user's terminal.

Moreover, a game system of the present invention includes:
a means adapted to perform the processing steps of the method according to any one of the above-described first to sixth inventions.

Also by this invention, similar effects to those of any one of the above-described first to sixth inventions are obtained.

Moreover, a computer program of the present invention includes:
a command to perform the above-described processing steps of any one of the above-described first to sixth inventions, wherein the computer program is executed by a computer.

Also by this invention, similar effects to those of any one of the above-described first to sixth inventions are obtained.

Moreover, a computer-readable recording medium of the present invention records:
a computer program including a command to perform the above-described processing steps of any one of the above-described first to sixth inventions, wherein the computer program is executed by a computer.

The above-described computer-readable recording medium is a non-transitory tangible media.

Also by this invention, similar effects to those of any one of the above-described first to sixth inventions are obtained.

Moreover, a computer program product of the present invention includes:
a computer-readable recording medium that records a computer program including a command to perform the above-described processing steps of any one of the above-described first to sixth inventions, wherein the computer program is executed by a computer.

Also by this invention, similar effects to those of any one of the above-described first to sixth inventions are obtained.

### ADVANTAGEOUS EFFECTS OF INVENTION

In accordance with the method, the game system, the computer program, the computer-readable recording medium and the computer program product according to the present invention, there is exerted an excellent effect that the trouble and the time, which are required for checking the operations of the posted game modules on the game server administrator's side, can be reduced.

### BRIEF DESCRIPTION OF THE DRAWINGS

FIG. 1 is a block diagram showing a state where a game server, game creators' terminals and game users' terminals according to an embodiment, which embodies the present invention, are connected to one another via the Internet.
FIG. 2 is a block diagram showing a configuration of the game server.
FIG. 3 is a block diagram showing a configuration of each of the game creators' terminals and the game users' terminals.
FIG. 4 is a flowchart showing a flow of processing in a game posting control processing means, the processing being executed in the game server.
FIG. 5 is a flowchart showing a flow of processing in a game use control processing means, the processing being executed in the game server.
FIG. 6 is a chart showing an operation example between the game server and each of the game creators' terminals.
FIG. 7 is a chart showing an operation example between the game server and each of the game users' terminals.

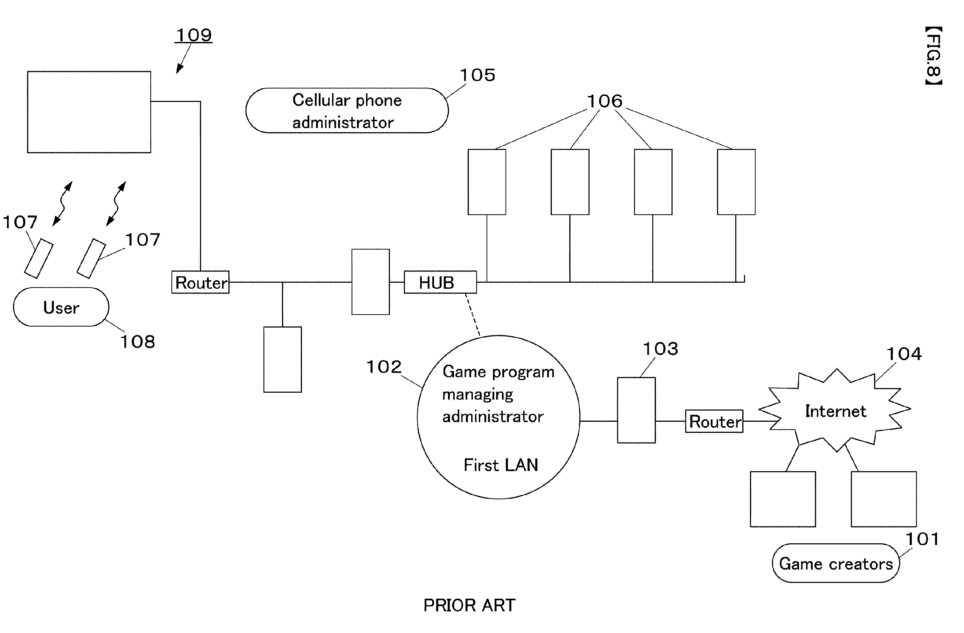

FIG. 8 is an overall configuration diagram of an embodiment, which embodies a conventional posting, examining, managing and using method of game programs.

### DESCRIPTION OF EMBODIMENTS

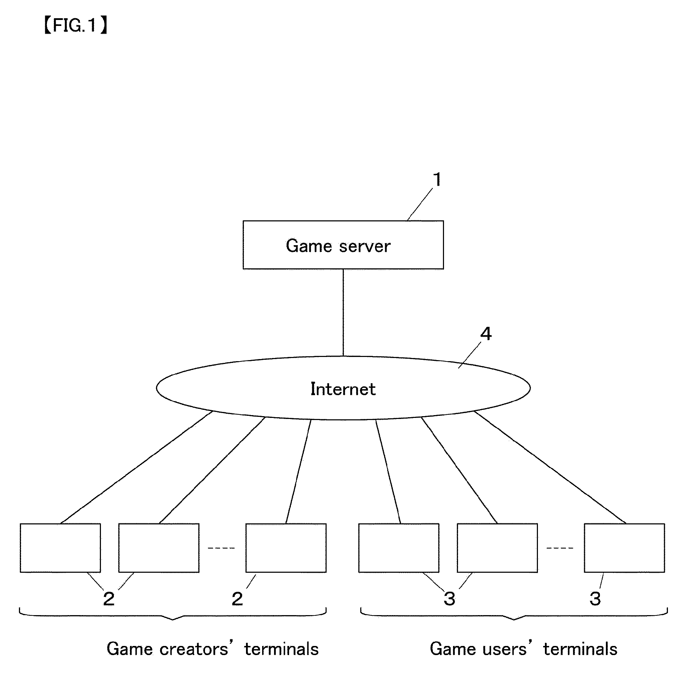

Referring to FIG. 1 to FIG. 7, a description is made below of an embodiment, which embodies a game system of the present invention as a game server 1, together with a computer program executed by the system, a computer-readable recording medium, a computer program product and a method for controlling the game system implemented by using the system.

As shown in FIG. 1, the game server 1 of the present invention is connected via the Internet 4 as a network to a plurality of game creators' terminals 2 and a plurality of game users' terminals 3. As will be described later, the game server 1 is configured to convert game modules, which are created by individual game creators by using various pieces of game creation software, into formats executable under predetermined virtual machine modules, and to allow game users to use the converted game modules and the predetermined virtual machine modules. In many cases, module formats differ for each piece of the game creation software, and are made executable under virtual machine modules corresponding to the respective module formats. The game server 1 of the present invention is configured as described above, and therefore, in accordance with the game server 1 of the present invention, the game users can enjoy games without being aware of the various pieces of the game creation software. In this example, the game server 1 is configured as a WEB server device that operates via the Internet 4, and the game creators' terminals and the game users' terminals 3 are configured as WEB client devices connected to the game server via the Internet 4.

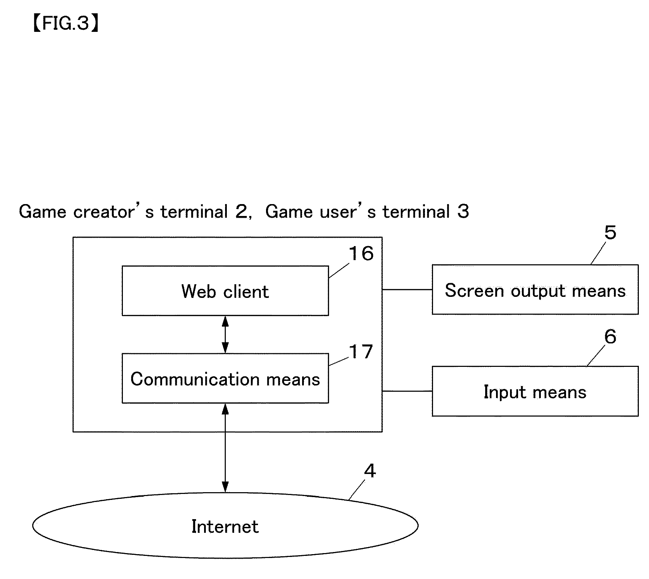

The game creators' terminals 2 and the game users' terminals 3 are not particularly limited as long as these terminals are terminals, each of which includes a communication means 17 ready for the Internet 4; however, a personal computer, a PDA (Personal Digital Assistance), a tablet computer, a cellular phone, a smart phone and the like are mentioned as examples. As shown in FIG. 3, each of the game creators' terminals 2 and the game users' terminals 3 of this example includes: the communication means 4 ready for the Internet 4; and a WEB client means 16 for mutually transmitting/receiving information to/from the game server 1 as the WEB server device via the Internet 4. Moreover, each of the game creators' terminals 2 and the game users' terminals 3 includes: a screen output means 5 such as a liquid crystal display device and a cathode ray tube display device; and an input means 6 such as a keyboard, a numeric keypad, a mouse and a track ball.

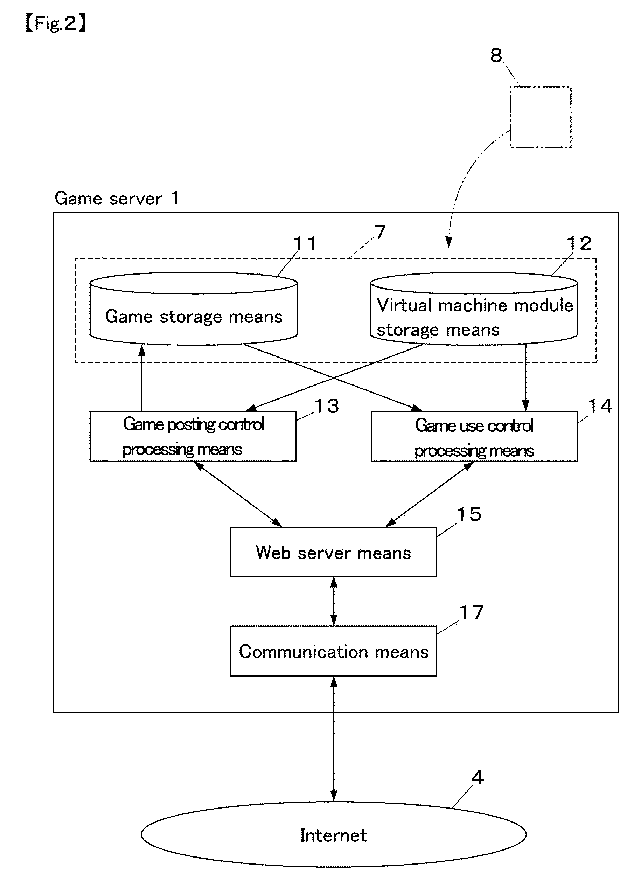

The game server 1 is a computer including a publicly known configuration composed in such a manner that a CPU (Central Processing Unit), a ROM (Read Only Memory), a RAM (Random Access Memory) and the like (any of which is not shown) are connected to one another via a bus. The game server 1 reads a computer program and data, which are stored in a storage means 7, which is shown in FIG. 2, into the above-described RAM, and controls a whole of the game server in accordance with contents of the computer program and the data.

The storage means 7 is composed of a storage device, for example, a hard disk device, a removable disk device (a reader device for a removal recording medium such as a flexible disk, a magneto-optical disk, a CD-ROM, a CD-R, and a CD-RW), and an IC memory. This hard disk device, the removable recording medium, the IC memory or the like is a computer-readable recording medium 8. As shown in FIG. 2, in this recording medium 8, there is recorded such a computer program for allowing the computer to function as the communication means 17, a WEB server means 15, a game storage means 11, a virtual machine module storage means 12, a game posting control processing means 13, and a game use control processing means 14. The computer-readable recording medium 8 can form a computer program product.

The game storage means 11 is a means into which game module information including the game modules and attribute information relating thereto are stored, and is configured as a database in this example. This attribute information is not particularly limited; however, as examples, there are mentioned: titles of the games; types of the game creation software by which the games are created; introductions of the games; whether or not to display a title screen at a time when each game is opened; whether or not to open a creator's name at the time when the game is opened; a genre of each game (that is, role playing, shooting, and the like); whether or not to use a background image at the time when the game is opened; screen data during operation of the game; and the like.

The virtual machine module storage means 12 stores testing virtual machine modules and the virtual machine modules, each of which is provided with a function of the predetermined virtual machine.

The WEB server means 15 is configured to transmit/receive data to/from the game creators' terminals 2 and the game users' terminals 3, which serve as the WEB client devices.

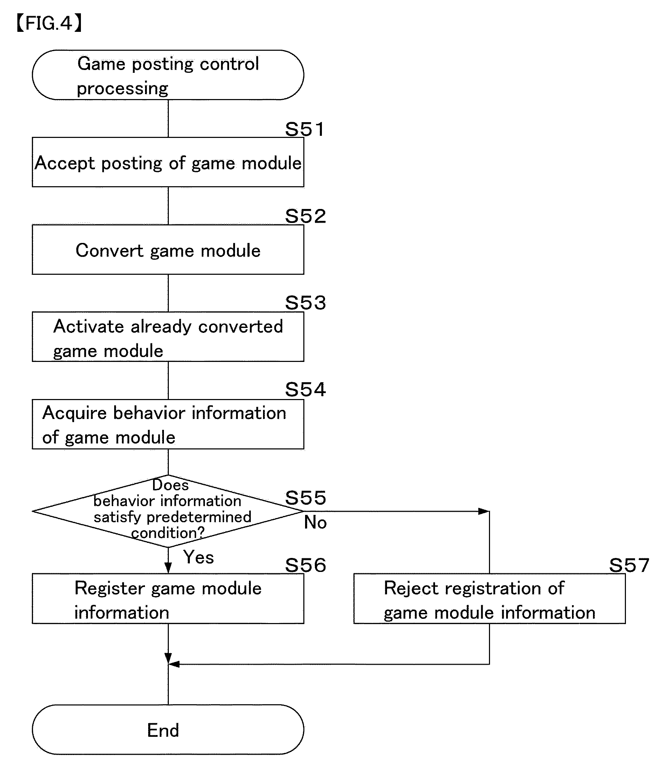

The game posting control processing means 13 processes posting of the game modules from the game creators' terminals 2 as follows. That is, as shown in FIG. 4, first, the posting of each of the game modules is accepted from the game creators' terminals 2 connected thereto via the Internet 4 (Step S51; this is a posting acceptance processing step). Subsequently, the above-described game module is converted into a predetermined format in accordance with which the game module is operable in the predetermined virtual machine (Step S52; this is a conversion processing step). Subsequently, under the testing virtual machine module provided with a function of the above-described virtual machine, the already converted game module is activated by an operation instruction from the game creators' terminal 2 (Step S53), and behavior information of the game module is acquired (Step S54; S53 and S54 are a behavior information acquisition processing step). At this time, the game creator is allowed to input the attribute information of the game module via the game creator's terminal 2, and the attribute information is acquired. Subsequently, it is checked whether the above-described behavior information satisfies a predetermined condition (Step S55), and in a case where the behavior information satisfies the predetermined condition, the already converted game module is stored in the game storage means 11 together with the attribute information thereof (Step S56), and in a case where the behavior information does not satisfy the predetermined condition, registration of the game module information is rejected (Step S57; S55 to S57 are a posting registration processing step).

The above-described behavior information and the above-described predetermined condition are not particularly limited; however, the following modes are mentioned as examples.
(1) A mode, in which the above-described behavior information is image data displayed on a screen of the game creator's terminal 2 during the operation of the game module, and the above-described predetermined condition is that the image data can be acquired. As an example, it is mentioned that this image data is used for introducing the game module to the game user, the image data being to be stored in the above-described attribute information. In this case, the acquisition of the image data is not particularly limited; however, may be automatically performed by the above-described testing virtual machine module at predetermined timing, or may be performed by the testing virtual machine module at timing designated by the game creator via the game creator's terminal 2 (this timing is timing while a screen desired for introduction use by the game creator is being displayed).
(2) A mode, in which the above-described behavior information is malfunction information indicating a check result as to whether or not a malfunction of the game module is present, and the above-described predetermined condition stands for that the above-described malfunction information indicates that the malfunction cannot be detected. The checking at this time as to whether or not the malfunction is present is not particularly limited; however, may be performed by the testing virtual machine module before activating the above-described game module, or may be performed by the testing virtual machine module during the operation of the game module.
(3) A mode in which the above-described mode of (1) and the above-described mode of (2) are combined with each other.

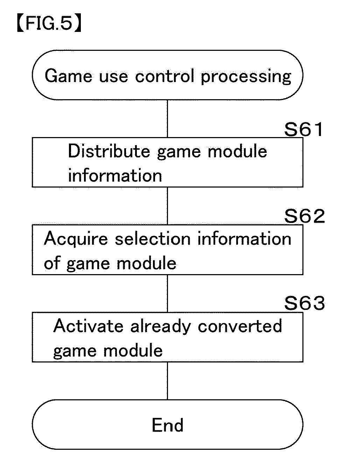

The game use control processing means 14 distributes the posted game module as follows. That is, as shown in FIG. 5, first, a list of pieces of game module information stored in the game storage means 11 is distributed to the game users' terminal 3 (Step S61). Subsequently, selection information of the game module information to be used in the game user's terminal 3 is acquired from the game user's terminal 3 (Step S62). Subsequently, the game user's terminal 3 connected via the Internet 4 is allowed to use the above-described game module and the above-described virtual machine module, which are stored in the game storage means 11 (Step S63; this is a distribution processing step).

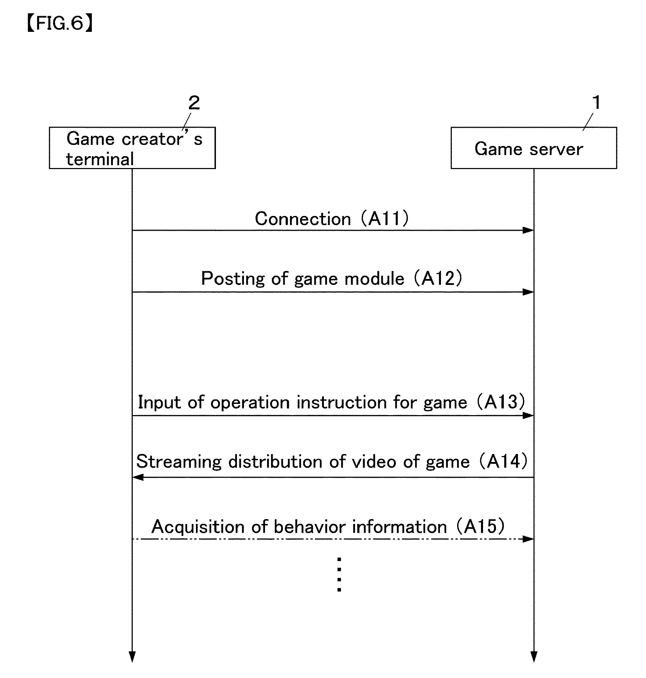

Next, FIG. 6 shows an example of a series of operations at a time of posting the game module between the game server 1 and the game creator's terminal 2. First, the game creator connects the game creator's terminal 2 to the game server 1 (A11). Then, the game server 1 displays a screen for posting the game module on the game creator's terminal 2. This screen enables designation of a game module to which posting thereof from the game creator's terminal 2 is desired, and instruction to post the game module. When the game creator designates the game module as a posting target via the game creator's terminal 2, and instructs the game creator's terminal 2 to post the game module to the game server 1, the game module is transmitted to the game server 1 (A12). Upon receiving the game module, the game server 1 converts the game module into the predetermined format in accordance with which the game module is operable in the predetermined virtual machine, and in addition, activates the converted game module under the above-described testing virtual machine module, and progresses the game while receiving operation instructions from the game creator's terminal 2 (A13). In addition, the game server 1 distributes a video on the screen under operation to the game users' terminals 3 in a streaming manner (A14). At this time, the game server 1 acquires the above-described behavior information of the game module. (For example, A15 in FIG. 6 shows a case where the game server 1 acquires the behavior information, which is acquired by the testing virtual machine module operating on the game creator's terminal 2, in a mode of the download distribution. For example, in the mode of the streaming distribution, in a case where the testing virtual machine module operating on the game server 1 acquires the above-described behavior information, the above-described behavior information is not transferred between the game creator's terminal 2 and the game server 1.) Then, the game server 1 stores the already converted game module in the game storage means 11 in a case where the above-described acquired behavior information satisfies a predetermined condition.

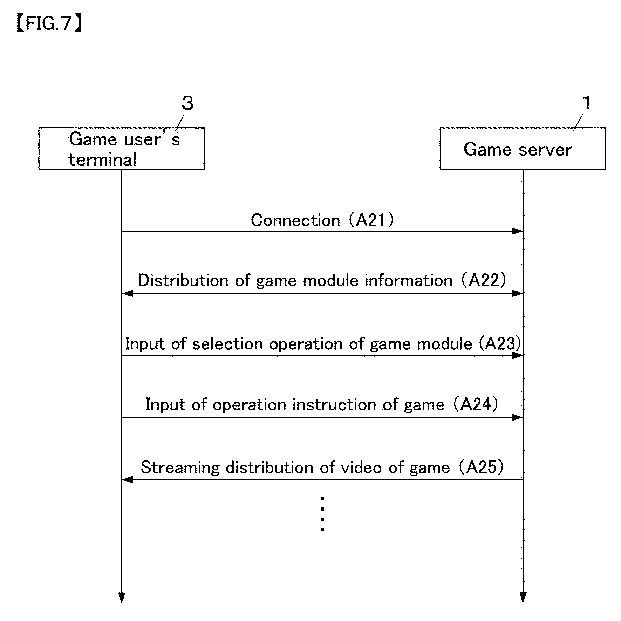

Moreover, FIG. 7 shows an example of a series of operations at a time of distributing the game module between the game server 1 and the game user's terminal 3. First, the game user connects the game user's terminal 3 to the game server 1 (A21). Then, the game server 1 displays a list of the game modules, which are stored in the game storage means 11, on a screen of the game user's terminal 3 (A22). This list enables selection of the game module desired to be distributed. When the game user selects any of the game modules via the game user's terminal 3, information regarding the selection is transmitted to the game server 1 (A23). Under the above-described virtual machine module, the game server 1 activates the selected game module, and progresses the game while receiving operation instructions from the game user's terminal 3 (A24), and in addition, distributes a video of the screen under operation to the game user's terminal 3 in a streaming manner (A25). In such a way, the game user can play the game.

In accordance with the present invention configured as described above, a configuration is adopted so that the above-described already converted game module can be activated by the operation instructions from the game creator's terminal 2, and accordingly, the operation of the game module can be thereby checked. Then, only such game modules for which the checking of the operations has been completed are registered in the game storage means 11, and accordingly, the subsequent trouble and time, which are required for checking the operations of the above-described game modules on the game server administrator's side, can be reduced.

Moreover, the above-described behavior information is the image data displayed on the screen of the above-described game creator's terminal 2 during the operation of the game module. If the mode in which the above-described predetermined condition is that the image data can be acquired is adopted, then based on the matter that the image data can be acquired, it can be confirmed that the game module is activated.

Moreover, if the mode is adopted, in which the above-described behavior information is the malfunction information indicating whether or not the malfunction of the game module is present, and the above-described predetermined condition stands for that the malfunction is not detected, then it can be confirmed that the game module is activated by checking the malfunction information.

Note that the present invention is not limited to the above-described embodiment, and can be changed and embodied appropriately, for example, in the following manner within the scope without departing from the spirit of the invention:
(1) To adopt a configuration so that the computer program of the present invention can be executed in a computer system including two or more computers; and
(2) To configure the game system of the present invention from a computer system including two or more computers.

### REFERENCE SIGNS LIST

- 1: GAME SERVER
- 2: GAME CREATOR'S TERMINAL
- 3: GAME USER'S TERMINAL
- 4: INTERNET
- 5: SCREEN OUTPUT MEANS
- 6: INPUT MEANS
- 7: STORAGE MEANS
- 8: COMPUTER-READABLE RECORDING MEDIUM
- 11: GAME STORAGE MEANS
- 12: VIRTUAL MACHINE MODULE STORAGE MEANS
- 13: GAME POSTING CONTROL PROCESSING MEANS
- 14: GAME USE CONTROL PROCESSING MEANS
- 15: WEB SERVER MEANS
- 16: WEB CLIENT MEANS
- 17: COMMUNICATION MEANS

## Claims

1. A method for controlling a game system comprising:
a posting acceptance processing step of accepting posting of a game module from a game creator's terminal connected via a network;
a conversion processing step of converting the game module into a predetermined format in accordance with which the game module is operable in a predetermined virtual machine;
a behavior information acquisition processing step of activating the already converted game module by an operation instruction from the game creator's terminal and acquiring behavior information of the game module under a testing virtual machine module provided with a function of the virtual machine; and
a posting registration processing step of storing the already converted game module into game storage means in a case where the acquired behavior information satisfies a predetermined condition,
wherein all of the processing steps are performed by being executed by a computer.

2. The method according to claim 1,
wherein the behavior information is image data displayed on a screen of the game creator's terminal during an operation of the game module, and
the predetermined condition is that the image can be acquired.

3. The method according to claim 1,
wherein the behavior information is malfunction information indicating a check result as to whether or not a malfunction of the game module is present, and
the predetermined condition stands for that the malfunction information indicates that the malfunction cannot be detected.

4. The method according to claim 1, further comprising:
a distribution processing step of allowing a game user's terminal, which is connected via the network, to use the game module stored in the game storage means and a virtual machine module provided with the function of the virtual machine.

5. The method according to claim 2, further comprising:
a distribution processing step of allowing a game user's terminal, which is connected via the network, to use the game module stored in the game storage means and a virtual machine module provided with the function of the virtual machine.

6. The method according to claim 3, further comprising:
a distribution processing step of allowing a game user's terminal, which is connected via the network, to use the game module stored in the game storage means and a virtual machine module provided with the function of the virtual machine.

7. A game system comprising:
a means adapted to perform the processing steps of the method according to any one of claims 1 to 6.
